# EUROPÄISCHE PATENTSCHRIFT

(11) **EP 3 728 899 B1**
(45) Veröffentlichungstag und Bekanntmachung des Hinweises auf die Patenterteilung: **02.02.2022**
(21) Anmeldenummer: 18830450.5
(22) Anmeldetag: 18.12.2018
(51) Int. Cl.: F16H 55/02, B62D 5/04, F16H 1/16, F16H 55/06

(54) **SCHNECKENRAD FÜR EIN SCHNECKENRADGETRIEBE EINER KRAFTFAHRZEUGLENKUNG MIT EINEM ZWISCHEN EINER NABE UND EINEM ZAHNKRANZ EINGESPRITZTEN TRÄGERRING**
WORM GEAR FOR A WORM GEAR MECHANISM OF A VEHICLE STEERING SYSTEM WITH A CARRIER RING INJECTED BETWEEN A HUB AND A TOOTHED WHEEL
ROUE À VIS SANS FIN POUR UN ENGRENAGE DE ROUE À VIS SANS FIN D'UNE DIRECTION DE VÉHICULE AUTOMOBILE COMPRENANT UNE BAGUE DE SUPPORT INJECTÉE ENTRE UN MOYEU ET UNE COURONNE DENTÉE

(30) Priorität: 22.12.2017 DE 102017131173
(43) Veröffentlichungstag der Anmeldung: 28.10.2020
(73) Patentinhaber: thyssenkrupp Presta AG, 9492 Eschen (LI); thyssenkrupp AG, 45143 Essen (DE)
(72) Erfinder: PETER, Manuel, 8340 Hinwil (CH); ERNSTSON, Gernot, 6800 Feldkirch (AT); GOTTWALD, Philipp, 9473 Gams (CH)
(74) Vertreter: thyssenkrupp Intellectual Property GmbH
(86) Internationale Anmeldenummer: PCT/EP2018/085637
(87) Internationale Veröffentlichungsnummer: WO 2019/121771

(56) Entgegenhaltungen:
- EP-A1- 0 619 445
- EP-A1- 1 777 439
- DE-A1-102012 102 775
- DE-A1-102012 102 780

## Beschreibung

Die vorliegende Erfindung betrifft ein Schneckenrad für ein Schneckenradgetriebe einer Kraftfahrzeuglenkung mit den Merkmalen des Anspruchs 1, ein Schneckenradgetriebe für eine Kraftfahrzeuglenkung sowie ein Verfahren zur Herstellung eines Schneckenrades für ein Schneckenradgetriebe einer Kraftfahrzeuglenkung mit den Merkmalen des Anspruchs 10.

Für den Einsatz elektromechanischer Hilfskraftlenkungen werden unter anderem Getriebe benötigt, welche ein Hilfsdrehmoment von einem Elektromotor auf eine Lenkwelle übertragen. Für gewöhnlich treibt der Elektromotor eine Schnecke an, welche mit einem auf der Lenkwelle oder auf einem Ritzel drehfest angeordneten Schneckenrad in Eingriff steht.

Das Schneckenrad umfasst einen Einleger, der mit der Lenkwelle oder mit dem Ritzel drehfest verbindbar ist, wobei dieser Einleger mit einem Kunststoff ergänzt wird. Dieser Kunststoff bildet den sogenannten Zahnkranz aus.

Aus der Offenlegungsschrift EP 1 780 445 A1 ist ein Zahnrad mit einem Einlegeteil bekannt, das eine radiale Erhebung aufweist, wobei dieses Einlegeteil mit einem durch Umspritzen ausgebildeten Zahnkranz ergänzt ist.

Ein Nachteil dieser Lösung ist die radiale Anordnung der Erhebung, wodurch ungünstige Strömungsverhältnisse im Kunststoff beim Einspritzen entstehen und sich ein inhomogenes Kunststoffgefüge ausbildet.

Aus der EP 1777 439 A1 ist ein Schneckenrad bekannt, bei dem der der Trägerkörper ein zwischen den Zahnkranz und der Nabe mittels Spritzgussverfahren eingespritzter Trägerring ist, der die Nabe und den Zahnkranz formschlüssig miteinander verbindet. Der Zahnkranz weist Verstärkungsrippen auf, die sich auf beiden Stirnseiten, radial von den Zähnen aus in Richtung der Schneckenradlängsachse erstrecken. Ein ähnliches Schneckenrad ist in der DE 10 2012 102775 A1 beschrieben.

Ein Nachteil dieser Lösung ist, dass eine optimale Verbindung zwischen Trägerring und Zahnkranz einen hinreichend großen radialen Freiraum erfodert, wodurch die Gestaltungsfreiheit eingeschränkt und der Fertigungsaufwand erhöht werden.

Es ist Aufgabe der vorliegenden Erfindung, ein Schneckenrad für ein Schneckenradgetriebe einer Kraftfahrzeuglenkung anzugeben, das mit möglichst einfachen Mitteln eine verbesserte Verbindung zwischen Trägerring und Zahnkranz ermöglicht.

Diese Aufgabe wird von einem Schneckenrad für ein Schneckenradgetriebe einer Kraftfahrzeuglenkung mit den Merkmalen des Anspruchs 1 und einem Verfahren zur Herstellung eines Schneckenrades für ein Schneckenradgetriebe einer Kraftfahrzeuglenkung mit den Merkmalen des Anspruchs 10 gelöst.

Vorteilhafte Ausbildungen der Erfindung sind in den Unteransprüchen aufgeführt.

Demnach ist ein Schneckenrad für ein Schneckenradgetriebe einer Kraftfahrzeuglenkung umfassend eine Nabe, einen Trägerkörper und einen Zahnkranz vorgesehen, wobei der Zahnkranz eine Vielzahl an Zähnen aufweist, die bezogen zu einer Schneckenradlängsachse sich radial nach außen erstrecken, und wobei der Trägerkörper ein zwischen den Zahnkranz und der Nabe mittels Spritzgussverfahren eingespritzter Trägerring ist, der die Nabe und den Zahnkranz formschlüssig miteinander verbindet, wobei der Zahnkranz Verstärkungsrippen aufweist, die sich auf beiden Stirnseiten, radial von den Zähnen aus in Richtung der Schneckenradlängsachse erstrecken, bei dem erfindungsgemäß vorgesehen ist, dass der Zahnkranz Einspritzlöcher zwischen der Schneckenradlängsachse und den Verstärkungsrippen aufweist, die zum Einspritzen eines Kunststoffs zur Ausbildung des Trägerrings ausgebildet sind.

Der Zahnkranz weist Verstärkungsrippen auf, die sich auf beiden Stirnseiten, radial von den Zähnen aus in Richtung der Schneckenradlängs-achse oder der Zahnkranzradmitte erstrecken.

Das die Nabe bildende Einlageteil ist bevorzugt aus Stahl gefertigt.

Der Zahnkranz ist vorzugsweise ein Einkomponenten (1K)-Kunststoffteil und somit einstückig ausgebildet. Ein Aufbringen von Zähnen auf ein Trägerteil mittels Spritzguss ist somit nicht notwendig. Der Zahnkranz kann daher besonders wirtschaftlich hergestellt werden.

Vorzugsweise weist das Einlageteil einen Zahnkranz auf, der in eine entsprechende Ausnehmung in eine Innenseite des Zahnkranzes greift. Somit lassen sich das Einlageteil und der Zahnkranz in einem ersten Herstellungsschritt einfach miteinander verbinden.

Erfindungsgemäß ist vorgesehen, dass der Zahnkranz Einspritzlöcher zwischen der Schneckenradlängsachse und den Verstärkungsrippen aufweist, die zum Einspritzen eines Kunststoffs zur Ausbildung des Trägerrings vorgesehen sind. Der Zahnkranz und/oder der Trägerring besteht vorzugsweise aus Kunstharz oder einem Thermoplast, insbesondere aus Polyamid, Polyacetal, gesättigtem Polyester, Polyether, und/oder Etherketon oder weist Verstärkungsfasern oder einen faserverstärkten Kunststoff auf.

Bevorzugt sind die Einspritzlöcher in regelmäßigen Abständen entlang des Zahnkranzumfangs angeordnet. Bevorzugt sind mindestens vier Einspritzlöcher vorgesehen, weiter bevorzugt mehr als sechs Einspritzlöcher entlang des Zahnkranzumfangs vorgesehen. Besonders bevorzugt sind zwölf Einspritzlöcher entlang des Zahnkranzumfangs vorgesehen. Es ist weiterhin denkbar und möglich, wenn mehrreihige Einspritzlöcher entlang des Zahnkranzumfangs vorgesehen sind, beispielsweise zwei, um das Einlegeteil mit dem Zahnkranz stoff-und formschlüssig miteinander zu verbinden.

Das Spritzgussverfahren wird so ausgeführt, dass der Trägerring nicht über die Stirnseiten der Zähne des Zahnkranzes vorsteht. Vorzugsweise ist der Trägerring an den Außenseiten plan ausgebildet und weist keine Vorsprünge oder Ausnehmungen auf.

In einer bevorzugten Ausführungsform weist der Trägerring bezogen auf eine Schneckenradhochachse nach innen weisende Rippen auf, die in radialer Richtung konisch ausgebildet sind. Dabei ist es vorteilhaft, wenn die Rippen des Trägerrings eine Rippendicke und Rippenabstände aufweisen, die kleiner als oder gleich groß wie die Grundwandstärke des Trägerrings sind.

Vorzugsweise weist der Trägerring Hinterschnitte auf, die ein Verklemmen des Trägerrings mit dem Zahnkranz bei der Herstellung erlauben.

Weiterhin ist ein Schneckenradgetriebe für eine Kraftfahrzeuglenkung, mit einem zuvor beschriebenen Schneckenrad vorgesehen, wobei das Schneckenrad in Eingriff mit einer Schnecke steht.

Zudem ist ein Verfahren zur Herstellung eines Schneckenrades für ein Schneckenradgetriebe einer Kraftfahrzeuglenkung vorgesehen. Das Schneckenradgetriebe umfasst dabei eine Nabe, einen Trägerkörper und einen Zahnkranz, wobei der Zahnkranz eine Vielzahl an Zähnen aufweist, die bezogen zu einer Schneckenradlängsachse sich radial nach außen erstrecken. Das Verfahren umfasst folgende Schritte:
- Bereitstellen der Nabe in Form eines Einlegeteils;
- Einsetzen des Einlegeteils in den Zahnkranz;
- Einspritzen eines Kunststoffes zwischen den Zahnkranz und dem Einlegeteil mittels eines Spritzgussverfahrens zur Ausbildung des Trägerkörpers und zwar derart, dass der Trägerkörper in Form eines Trägerringes die Nabe und den Zahnkranz formschlüssig miteinander verbindet, wobei vorgesehen ist, dass der Zahnkranz Einspritzlöcher aufweist, in die der Kunststoff zur Ausbildung des Trägerrings eingespritzt wird und zwar derart, dass sich der Kunststoff gleichmäßig auf beiden Seitenflächen zwischen dem Einlegeteil und dem Zahnkranz verteilt.

Der Zahnkranz weist erfindungsgemäß Einspritzlöcher auf, in die der Kunststoff zur Ausbildung des Trägerrings eingespritzt wird und zwar derart, dass sich der Kunststoff gleichmäßig auf beiden Seitenflächen zwischen dem Einlegeteil und dem Zahnkranz verteilt. Die Einspritzlöcher sind, wie oben bereits beschrieben, in regelmäßigen Abständen entlang des Zahnkranzumfangs positioniert.

Vorzugsweise steht der Trägerring im ausgehärteten Zustand nicht über die Stirnseiten der Zähne des Zahnkranzes vor. Dabei ist es vorteilhaft, wenn der Trägerring an den Außenseiten plan ausgebildet ist und keine Vorsprünge oder Ausnehmungen aufweist.

Bevorzugt ist der Zahnkranz derart ausgebildet, dass im ausgehärteten Zustand der Trägerring nach innen weisende Rippen aufweist, die in radialer Richtung konisch ausgebildet sind.

Weiterhin bevorzugt ist der Zahnkranz derart ausgebildet, dass im ausgehärteten Zustand die Rippen des Trägerrings eine Rippendicke und Rippenabstände aufweisen, die kleiner als oder gleich groß wie die Grundwandstärke des Trägerrings sind.

Vorzugsweise ist der Zahnkranz derart ausgebildet, dass im ausgehärteten Zustand der Trägerring Hinterschnitte aufweist, die ein Verklemmen des Trägerrings mit dem Zahnkranz bei der Herstellung erlauben.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung einer elektromechanischen Kraftfahrzeuglenkung,
- Fig. 2:: einen Querschnitt durch ein Schneckenradgetriebe,
- Fig. 3:: eine räumliche Ansicht eines Schneckenrades,
- Fig. 4:: eine Explosionszeichnung des Schneckenrades aus Figur 3 ohne Trägerring,
- Fig. 5,6:: zwei Darstellungen des zusammengesetzten Schneckenrades aus Figur 3,
- Fig. 7:: eine Darstellung eines Fertigungsschrittes des Schneckenrades im Längsschnitt, sowie
- Fig. 8:: ein Längsschnitt durch das fertiggestellte Schneckenrad mit Trägerring.

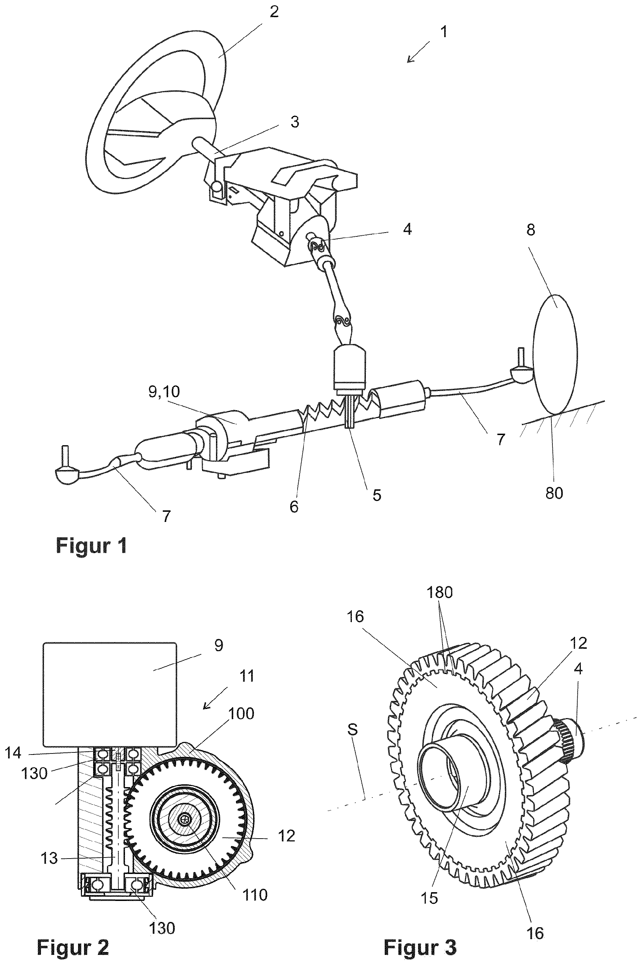

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab 110 in funktioneller Verbindung mit der unteren Lenkwelle 4. Die obere Lenkwelle 3 ist mit dem Lenkrad unmittelbar drehfest verbunden. Die untere Lenkwelle 4 weist entlang ihrer Schneckenradlängsachse S eine partielle Verzahnung auf zum formschlüssigen Eingriff mit einer Gelenkanordnung, welche wiederrum über eine Welle mit einem Lenkgetriebe verbunden werden kann. Die untere Lenkwelle 4 ist mit einem Ritzel 5 drehfest verbunden. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um dem Fahrer bei dieser Lenkbewegung zu unterstützen. Die Servoeinheit 10 kann dabei als Überlagerungslenkung an der Lenksäule oder als Hilfskraftunterstützungseinrichtung an dem Ritzel 5 oder der Zahnstange 6 angeordnet sein.

Figur 2 zeigt ein in einem Gehäuse 100 angeordnetes Schneckengetriebe 11. Ein Schneckenrad 12 ist vorgesehen, welches beispielsweise mit der Lenkwelle 4 drehfest verbunden ist. Das Schneckenrad 12 wird über eine Schnecke 13 angetrieben, welche ihrerseits über den Elektromotor 9 angetrieben ist, wobei der Abtrieb 14 des Elektromotors 9 entsprechend zur Drehmomentübertragung mit der Schnecke 13 gekoppelt ist. Die Schnecke ist an ihren beiden Enden über ein Wälzlager 130 im Gehäuse 100 radial abgestützt und ermöglicht einen Winkelausgleich.

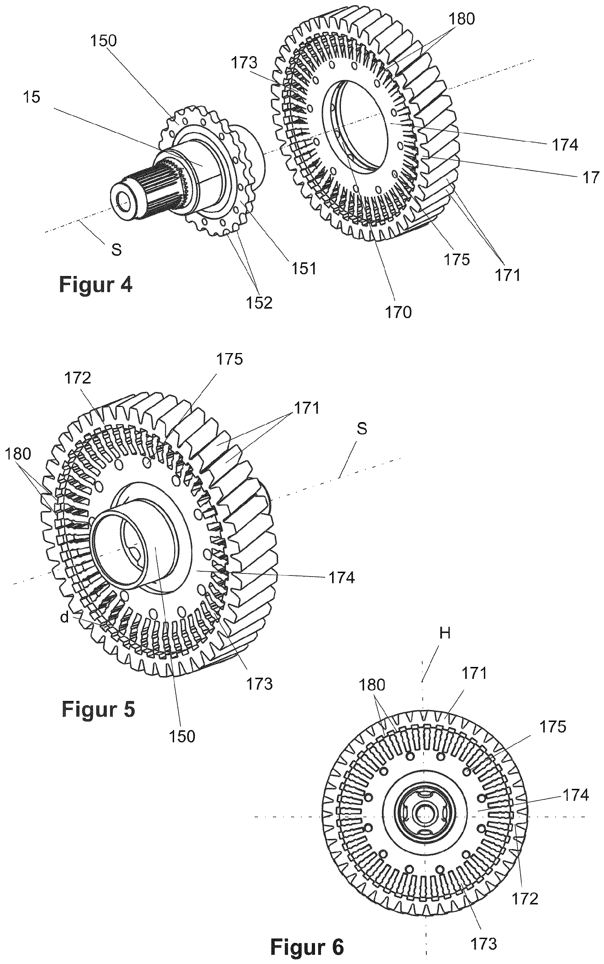

In der Figur 3 ist das Schneckenrad 12 aufweisend eine Nabe 15, einen Trägerring 16 und einen Zahnkranz 17 entlang der Schneckenradlängsachse S dargestellt. Dabei ist die Nabe 15 einteilig mit der Ausgangswelle 4 ausgebildet und weist an ihrem einen Ende die Verzahnung für die formschlüssige Verbindung mit der Gelenkanordnung auf und ist andererseits in Richtung der Eingangswelle 3 hin geöffnet, sodass darin der Torsionsstab 110 eingeführt werden kann. Der Torsionsstab 110 kann auch durch das Ende, an welchem die Gelenkanordnung vorgesehen ist, in die Ausgangswelle 4 eingeführt werden. Die Ausgangswelle hat, wie in Figur 6 dargestellt, eine Kleeblattförmige Innenkontur, um darin eine Welle mit einer entsprechenden Aussenkontur formschlüssig aufzunehmen.

Wie in Figur 4 gezeigt, bildet ein Einlageteil 150 die Nabe 15 aus. Das Einlageteil 15 ist vorzugsweise aus Metall, insbesondere Stahl, gefertigt. Der Zahnkranz 17 ist ein Einkomponenten-Kunststoffteil und wird in einem ersten Prozessschritt mit dem Einlageteil 150 verbunden. Dazu weist das Einlageteil 150 einen Zahnkranz 151 auf, der in eine entsprechende Ausnehmung 170 in eine Innenseite des Zahnkranzes 17 greift. Das Einlegeteil 150 weist einen Zahnkranz 151 mit einer Verzahnung 152 auf, wobei die Zähne 152 bezogen auf die Schneckenradlängsachse S radial nach außen gerichtet. Dabei ist zwischen zwei Vorsprüngen oder Zähnen 152 des Zahnkranzes 151 je ein Einspritzloch 175 vorgesehen. Gemäß dieser Ausführungsform entspricht das Verhältnis zwischen den Vorsprüngen 152 des Zahnkranzes 151 des Einlegeteils 150 und den Einspritzlöchern 175 des Kunststoffzahnkranzes 17 einem Verhältnis von 1:2. Oder anders ausgedrückt: Zwischen jeder zweiten Vertiefung, welche zwischen zwei Zahnkranzzähnen 152 gebildet ist, ist je ein Einspritzloch 175 vorgesehen.

Der zusammengesetzte Zustand des Einlageteils 150 mit dem Zahnkranz 17 ist in den Figuren 5 und 6 dargestellt. Der Zahnkranz 17 weist Zähne 171 auf, die von einem zentralen umlaufenden ringförmigen Steg 172 radial nach außen abgehen. Verstärkungsrippen 173 erstrecken sich auf den beiden Stirnseiten, radial von dem ringförmigen Steg 172 aus beziehungsweise radial von den Zähnen 171, in Richtung der Zahnkranzradmitte 174 oder in Richtung der Nabe 15. Die Verstärkungsrippen 173 sind zwischen den Einspritzlöchern 175 und den Zähnen 171 des Zahnkranzes 17 vorgesehen. Zwischen den Zähnen 171 und den Verstärkungsrippen ist ein Abstand d vorgesehen in Richtung der Schneckenradhochachse H, sodass die Verstärkungsrippen bezogen auf die Zahnkranzverzahnung nach innen versetzt sind. Die Stirnseiten des Schneckenrads sind somit außerhalb der Verzahnung 171 schmaler ausgebildet als im Bereich des Stegs 172 oder der Verzahnung. Die Verstärkungsrippen 173 dienen als Verstärkung des Zahnkranzes 17. Die Verstärkungsrippen 173 werden auf einer Seitenfläche des Zahnkranzes in Richtung der Einspritzlöcher 175 beziehungsweise in Richtung der Rotationsachse S hin schmaler und weisen Krümmungen auf. Auf der anderen Seitenfläche wechseln sich erhabene Rippen mit abgesenkten Verstärkungsrippen ab, wobei diese im Längsschnitt des Schneckenrads plan ausgebildet sind. Eine Achsensymmetrie der Verstärkungsrippen 173 liegt bei diesem Ausführungsbeispiel nicht vor. Die Stirnseiten des Zahnkranzes 17 außerhalb des Verzahnungsbereichs haben eine Grundwandstärke. Weiterhin ist in den Figuren 3 bis 6 erkennbar, dass der Zahnkranz gegenüberliegend zu den Zähnen 171, welche in die Schnecke greifen nach innen weisende Zähne 180 aufweist. Die Zähne 180 können schwalbenschwanzförmig ausgebildet sein, sodass während des Spritzgiessens die Schmelze aufgehalten wird und eine definierte Faserorientierung realisiert werden kann. Die nach innen weisenden Zähne 180 dienen einem besseren Stoff- und Formschluss mit dem Trägerring 16. Zwischen jedem Zahnfuß der Aussenverzahnung 171 ist ein nach innen weisender Zahn 180 vorgesehen. Der Zahnkranz 17 hat Einspritzlöcher 175, in welcher ein Kunststoff zur Ausbildung des Trägerrings 16 eingespritzt wird.

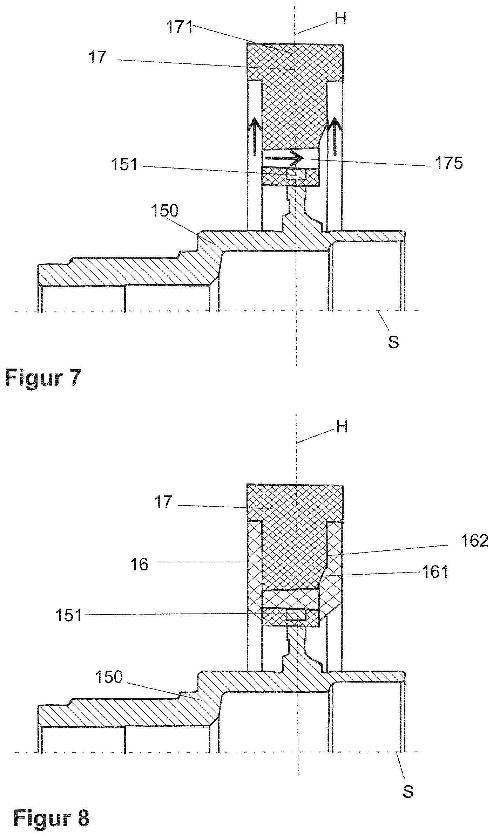

Die Figur 7 zeigt schematisch das Spritzgießen des Trägerringes 16. Der Kunststoff wird in die Einspritzlöcher 175 eingespritzt und verteilt sich gleichmäßig entlang der Pfeile, auf beiden Seitenflächen zwischen dem Einlegeteil 150 und dem Zahnkranz 17. Da die Einspritzlöcher 175 den Zahnkranz 17 durchsetzen wird neben der Düsenseite auch die Auswerferseite gefüllt.

In der Figur 8 ist der ausgebildete Trägerring 16 im Längsschnitt dargestellt. Das Spritzgießen wird so durchgeführt, dass der ausgehärtete Trägerring 16, nicht über die Stirnseiten der Zähne 171 des Zahnkranzes 17 vorsteht. Der eingespritzte Kunststoff fließt dabei durch den Zahnkranz 17 und die Vertiefungen zwischen den Zahnkranzzähnen 152 des Einlegeteils 150. Der Trägerring 16 weist nach innen zeigende Rippen 161 auf, die in radialer Richtung konisch ausgebildet sind und Hinterschnitte 162 aufweisen, sodass sich der Trägerring 16 bei der Herstellung in den Zahnkranz 17 verklemmt. Die Rippendicke und die Rippenabstände des Trägerrings 16 sind so gewählt, dass diese kleiner als oder gleich groß wie die Grundwandstärke des Zahnkranzes 17 bzw. des Trägerrings 16 sind. Das Bauteil erlangt so eine sehr hohe Steifigkeit. Der Trägerring 16 weist weiterhin keine Vertiefungen oder Erhebungen auf den Außenflächen auf.

Der durch Spritzguss gebildete Trägerring 16 ermöglicht einen Formschluss und zumindest teilweise einen Stoffschluss zwischen Zahnkranz 17 und Trägerring 16. Er ist eine hochsteife tragfähige Struktur, die wirtschaftlich hergestellt werden kann.

## Patentansprüche

1. Schneckenrad (12) für ein Schneckenradgetriebe (11) einer Kraftfahrzeuglenkung umfassend eine Nabe (15), einen Trägerkörper (16) und einen Zahnkranz (17), wobei der Zahnkranz (17) eine Vielzahl an Zähnen (171) aufweist, die bezogen zu einer Schneckenradlängsachse (S) sich radial nach außen erstrecken, wobei der Trägerkörper (16) ein zwischen den Zahnkranz (17) und der Nabe (15) mittels Spritzgussverfahren eingespritzter Trägerring ist, der die Nabe (15) und den Zahnkranz (17) formschlüssig miteinander verbindet, wobei der Zahnkranz (17) Verstärkungsrippen (173) aufweist, die sich auf beiden Stirnseiten, radial von den Zähnen (171) aus in Richtung der Schneckenradlängsachse (S) erstrecken, **dadurch gekennzeichnet, dass** der Zahnkranz (17) Einspritzlöcher (175) zwischen der Schneckenradlängsachse (S) und den Verstärkungsrippen (173) aufweist, die zum Einspritzen eines Kunststoffs zur Ausbildung des Trägerrings (16) ausgebildet sind.

2. Schneckenrad nach Anspruch 1, **dadurch gekennzeichnet, dass** ein die Nabe (15) bildendes Einlageteil (150) aus Stahl gefertigt ist.

3. Schneckenrad nach einem der vorhergehenden Ansprüche, **dadurch gekennzeichnet, dass** der Zahnkranz (17) ein Einkomponenten-Kunststoffteil ist.

4. Schneckenrad nach Anspruch 2, **dadurch gekennzeichnet, dass** das Einlageteil (150) einen Zahnkranz (151) aufweist, der in eine entsprechende Ausnehmung (170) in eine Innenseite des Zahnkranzes (17) greift.

5. Schneckenrad nach einem der vorhergehenden Ansprüche, **dadurch gekennzeichnet, dass** der Trägerring (16), nicht über die Stirnseiten der Zähne (171) des Zahnkranzes (17) vorsteht.

6. Schneckenrad nach einem der vorhergehenden Ansprüche, **dadurch gekennzeichnet, dass** der Trägerring (16) nach innen weisende Rippen (161) aufweist, die in radialer Richtung konisch ausgebildet sind.

7. Schneckenrad nach Anspruch 6, **dadurch gekennzeichnet, dass** die Rippen (161) des Trägerrings (16) eine Rippendicke und Rippenabstände aufweisen, die kleiner als oder gleich groß wie die Grundwandstärke des Trägerrings (16) sind.

8. Schneckenrad nach einem der vorhergehenden Ansprüche, **dadurch gekennzeichnet, dass** der Trägerring (16) Hinterschnitte (162) aufweist, die ein Verklemmen des Trägerrings (16) mit dem Zahnkranz (17) bei der Herstellung erlauben.

9. Schneckenradgetriebe (11) für eine Kraftfahrzeuglenkung, mit einem Schneckenrad (12) nach einem der Ansprüche 1 bis 8 und einer mit dem Schneckenrad (12) in Eingriff stehenden Schnecke (13).

10. Verfahren zur Herstellung eines Schneckenrades (12) für ein Schneckenradgetriebe (11) einer Kraftfahrzeuglenkung (1) umfassend eine Nabe (15), einen Trägerkörper (16) und einen Zahnkranz (17), wobei der Zahnkranz (17) eine Vielzahl an Zähnen (171) aufweist, die bezogen zu einer Schneckenradlängsachse (S) sich radial nach außen erstrecken, wobei das Verfahren folgende Schritte aufweist:
• Bereitstellen der Nabe (15) in Form eines Einlegeteils (150);
• Einsetzen des Einlegeteils (150) in den Zahnkranz (17);
• Einspritzen eines Kunststoffes zwischen den Zahnkranz (17) und dem Einlegeteil (150) mittels eines Spritzgussverfahrens zur Ausbildung des Trägerkörpers (16) und zwar derart, dass der Trägerkörper (16) in Form eines Trägerringes die Nabe (15) und den Zahnkranz (17) formschlüssig verbindet, **dadurch gekennzeichnet, dass** der Zahnkranz (17) Einspritzlöcher (175) aufweist, in die der Kunststoff zur Ausbildung des Trägerrings (16) eingespritzt wird und zwar derart, dass sich der Kunststoff gleichmäßig auf beiden Seitenflächen zwischen dem Einlegeteil (150) und dem Zahnkranz (17) verteilt.

11. Verfahren nach Anspruch 10, **dadurch gekennzeichnet, dass** der Trägerring (16) nicht über die Stirnseiten der Zähne (171) des Zahnkranzes (17) vorsteht.

12. Verfahren nach einem der Ansprüche 10 bis 11, **dadurch gekenn-zeichnet,** dass der Zahnkranz (17) derart ausgebildet ist, dass im ausgehärteten Zustand der Trägerring (16) nach innen weisende Rippen (161) aufweist, die in radialer Richtung konisch ausgebildet sind.

13. Verfahren nach einem der Ansprüche 10 bis 12, **dadurch gekenn-zeichnet,** dass der Zahnkranz (17) derart ausgebildet ist, dass im ausgehärteten Zustand die Rippen (161) des Trägerrings (16) eine Rippendicke und Rippenabstände aufweisen, die kleiner als oder gleich groß wie die Grundwandstärke des Trägerrings (16) sind.

14. Verfahren nach einem der Ansprüche 10 bis 13, **dadurch gekenn-zeichnet,** dass der Zahnkranz (17) derart ausgebildet ist, dass im ausgehärteten Zustand der Trägerring (16) Hinterschnitte (162) aufweist, die ein Verklemmen des Trägerrings (16) mit dem Zahnkranz (17) bei der Herstellung erlauben.

## Claims

1. A worm gear (12) for a worm gear system (11) of a motor vehicle steering device, comprising a hub (15), a support element (16), and a gear rim (17), wherein the gear rim (17) has a multiplicity of teeth (171) which extend radially outward in terms of a worm gear longitudinal axis (S), wherein the support element (16) is a support ring which by means of an injection-molding method is injected between the gear rim (17) and the hub (15) and which connects in a form-fitting manner the hub (15) and the gear rim (17), wherein the gear rim (17) has reinforcement ribs (173) which, on both end sides, from the teeth (171) extend radially in the direction of the worm gear longitudinal axis (S), **characterized in that** the gear rim (17) has injection bores (175) which between the worm gear longitudinal axis (S) and the reinforcement ribs (173) are configured for injecting a plastics material for configuring the support ring (16).

2. The worm gear as claimed in claim 1, **characterized in that** the insert part (150) forming the hub is made from steel.

3. The worm gear as claimed in one of the preceding claims, **characterized in that** the gear rim (17) is a single-component plastics material part.

4. The worm gear as claimed in claim 2, **characterized in that** the insert part (150) has a gear rim (151) which engages in a corresponding recess (170) in an internal side of the gear rim (17).

5. The worm gear as claimed in one of the preceding claims, **characterized in that** the support ring (16) does not project beyond the end sides of the teeth (171) of the gear rim (17).

6. The worm gear as claimed in one of the preceding claims, **characterized in that** the support ring (16) has inwardly pointing ribs (161) which in the radial direction are configured so as to be conical.

7. The worm gear as claimed in claim 6, **characterized in that** the ribs (161) of the support ring (16) have a rib thickness and rib spacings which in size are smaller than or equal to the basic wall thickness of the support ring (16).

8. The worm gear as claimed in one of the preceding claims, **characterized in that** the support ring (16) has undercuts (162) which in the production permit jamming between the support ring (16) and the gear rim (17).

9. A worm gear system (11) for a motor vehicle steering device, having a worm gear (12) as claimed in one of claims 1 to 8 and having a worm (13) which engages with the worm gear (12).

10. A method for producing a worm gear (12) for a worm gear system (11) of a motor vehicle steering device (1), comprising a hub (15), a support element (16), and a gear rim (17), wherein the gear rim (17) has a multiplicity of teeth (171) which extend radially outward in terms of a worm gear longitudinal axis (S), wherein the method comprises the following steps:
• providing the hub (15) in the form of an insert part (150);
• inserting the insert part (150) into the gear rim (17);
• injecting a plastics material for configuring the support element (16) between the gear rim (17) and the insert part (150) by means of an injection-molding method specifically in such a manner that the support element (16) in the form of a support ring connects in a form-fitting manner the hub (15) and the gear rim (17), **characterized in that** the gear rim (17) has injection bores (175) into which the plastics material for configuring the support ring (16) is injected specifically in such a manner that the plastics material is uniformly distributed on both lateral faces between the insert part (150) and the gear rim (17).

11. The worm gear as claimed in claim 10, **characterized in that** the support ring (16) does not project beyond the end sides of the teeth (171) of the gear rim (17).

12. The method as claimed in one of claims 10 to 11, **characterized in that** the gear rim (17) is configured in such a manner that the support ring (16) in the cured state has inwardly pointing ribs (161) which in the radial direction are configured so as to be conical.

13. The method as claimed in one of claims 10 to 12, **characterized in that** the gear rim (17) is configured in such a manner that the ribs (161) of the support ring (16) in the cured state have a rib thickness and rib spacings which in size are smaller than or equal to the basic wall thickness of the support ring (16).

14. The method as claimed in one of claims 10 to 13, **characterized in that** the gear rim (17) is configured in such a manner that the support ring (16) in the cured state has undercuts (162) which in the production permits jamming between the support ring (16) and the gear rim (17).

## Revendications

1. Roue à vis sans fin (12) destinée à une transmission par roue à vis sans fin (11) d'un système de direction de véhicule automobile comprenant un moyeu (15), un corps porteur (16) et une couronne dentée (17), la couronne dentée (17) comportant un grand nombre de dents (171) qui s'étendent radialement vers l'extérieur par rapport à un axe de roue à vis sans fin longitudinal (S), le corps porteur (16) étant un anneau porteur qui est injecté entre la couronne dentée (17) et le moyeu (15) par un procédé de moulage par injection et qui relie le moyeu (15) et la couronne dentée (17) l'un à l'autre par complémentarité de formes, la couronne dentée (17) comportant des nervures de renforcement (173) qui s'étendent des deux côtés frontaux radialement depuis les dents (171) en direction de l'axe de roue à vis sans fin longitudinal (S), **caractérisée en ce que** la couronne dentée (17) comporte, entre l'axe de roue à vis sans fin longitudinal (S) et les nervures de renforcement (173), des trous d'injection (175) qui sont destinés à l'injection d'une matière synthétique pour former l'anneau porteur (16).

2. Roue à vis sans fin selon la revendication 1, **caractérisée en ce qu'**une pièce d'insertion (150) formant le moyeu (15) est en acier.

3. Roue à vis sans fin selon l'une des revendications précédentes, **caractérisée en ce que** la couronne dentée (17) est une pièce en matière synthétique monocomposant.

4. Roue à vis sans fin selon la revendication 2, **caractérisée en ce que** la pièce d'insertion (150) comporte une couronne dentée (151) qui s'engage dans un évidement correspondant (170) ménagé dans un côté intérieur de la couronne dentée (17).

5. Roue à vis sans fin selon l'une des revendications précédentes, **caractérisée en ce que** l'anneau porteur (16) ne fait pas saillie des côtés frontaux des dents (171) de la couronne (17).

6. Roue à vis sans fin selon l'une des revendications précédentes, **caractérisée en ce que** l'anneau porteur (16) comporte des nervures (161) qui sont dirigées vers l'intérieur et qui sont coniques dans la direction radiale.

7. Roue à vis sans fin selon la revendication 6, **caractérisée en ce que** les nervures (161) de l'anneau porteur (16) présentent une épaisseur et des écartements inférieurs ou égaux à l'épaisseur de paroi de base de l'anneau porteur (16).

8. Roue à vis sans fin selon l'une des revendications précédentes, **caractérisée en ce que** l'anneau porteur (16) présente des contre-dépouilles (162) qui permettent le serrage de l'anneau porteur (16) avec la couronne (17) lors de la fabrication.

9. Transmission par roue à vis sans fin (11) destinée à un système de direction de véhicule automobile, ladite transmission comprenant une roue à vis sans fin (12) selon l'une des revendications 1 à 8 et une vis sans fin (13) en engrènement avec la roue à vis sans fin (12) .

10. Procédé de fabrication d'une roue à vis sans fin (12) destinée à une transmission par roue à vis sans fin (11) d'un système de direction de véhicule automobile (1) comprenant un moyeu (15), un corps porteur (16) et une couronne dentée (17), la couronne dentée (17) comportant un grand nombre de dents (171) qui s'étendent radialement vers l'extérieur par rapport à un axe de roue à vis sans fin longitudinal (S),
le procédé comprenant les étapes suivantes :
• fournir le moyeu (15) sous la forme d'une pièce d'insertion (150) ;
• insérer la pièce d'insertion (150) dans la couronne dentée (17) ;
• injecter une matière synthétique entre la couronne dentée (17) et la pièce d'insertion (150) par un procédé de moulage par injection pour former le corps porteur (16) de telle sorte que le corps porteur (16) relie sous la forme d'un anneau porteur le moyeu (15) et la couronne dentée (17) par complémentarité de formes, **caractérisé en ce que** la couronne dentée (17) comporte des trous d'injection (175) dans lesquels la matière synthétique destinée à former l'anneau porteur (16) est injectée de telle sorte que la matière synthétique est répartie uniformément sur les deux surfaces latérales entre la pièce d'insertion (150) et la couronne dentée (17).

11. Procédé selon la revendication 10, **caractérisé en ce que** l'anneau porteur (16) ne fait pas saillie des côtés frontaux des dents (171) de la couronne dentée (17) .

12. Procédé selon l'une des revendications 10 à 11, **caractérisé en ce que** la couronne dentée (17) est conçue de telle sorte que, à l'état durci, l'anneau porteur (16) comporte des nervures (161) qui sont dirigées vers l'intérieur et qui sont coniques dans la direction radiale.

13. Procédé selon l'une des revendications 10 à 12, **caractérisé en ce que** la couronne dentée (17) est conçue de telle sorte que, à l'état durci, les nervures (161) de l'anneau porteur (16) présentent une épaisseur et des espacements qui sont inférieurs ou égaux à l'épaisseur de paroi de base de l'anneau porteur (16).

14. Procédé selon l'une des revendications 10 à 13, **caractérisé en ce que** la couronne dentée (17) est conçue de telle sorte que, à l'état durci, l'anneau porteur (16) comporte des contre-dépouilles (162) qui permettre de serrer l'anneau porteur (16) avec la couronne dentée (17) lors de la fabrication.
